# EUROPÄISCHE PATENTSCHRIFT

(11) **EP 2 544 118 B1**
(45) Veröffentlichungstag und Bekanntmachung des Hinweises auf die Patenterteilung: **27.07.2016**
(21) Anmeldenummer: 12168931.9
(22) Anmeldetag: 22.05.2012
(51) Int. Cl.: G06F 21/00, G06F 21/10

(54) **Verfahren zum Schützen von Dateninhalten**
Method for protecting data content
Procédé de protection de contenus de données

(30) Priorität: 04.07.2011 EP 11172574
(43) Veröffentlichungstag der Anmeldung: 09.01.2013
(73) Patentinhaber: Siemens Convergence Creators GmbH, 1210 Wien (AT)
(72) Erfinder: Gudenus, Gabriel, 1020 Wien (AT); Weiss, Peter, 1150 Wien (AT)
(74) Vertreter: Maier, Daniel Oliver

(56) Entgegenhaltungen:
- EP-A1- 2 141 626
- US-A1- 2002 164 023
- US-A1- 2004 136 533
- US-A1- 2008 140 714
- US-B1- 7 594 142

## Beschreibung

### Technisches Gebiet

Die Erfindung betrifft ein Verfahren zum Schützen von Dateninhalten, insbesondere Videodaten. Die Dateninhalte werden dabei von einer im einen Kommunikationsnetz verfügbaren Verteilungsanwendung (z.B. YouTube, Maxdome, Apple iTunes, etc.) zur Verfügung gestellt und können von dort auf eine Ausgabeeinheit geladen werden. Auf der Ausgabeeinheit (z.B. Personal Computer, Laptop, Tablet-PC, etc.) werden die Dateninhalte dann abgespielt.

### Stand der Technik

Von gängigen üblicherweise in einem Kommunikationsnetz wie z.B. dem Internet verfügbaren Verteilungsanwendungen für Dateninhalte wie z.B. YouTube, Maxdome, Apple iTunes, etc. wird beispielsweise ermöglicht, diese Dateninhalten, welche meist Videodaten sind, auf Ausgabeeinheiten (z.B. Personal Computer, Laptops, mobile Endgeräte, Tablet-PCs, etc.) zu laden oder übertragen. Üblicherweise sind - vor allem kostenpflichtige, qualitativ hochwertige - Dateninhalte durch so genannte Digital Right Management- oder DRM-Systeme vor insbesondere unberechtigtem Zugriff und/oder vor unberechtigter Vervielfältigung geschützt.

Unter Digital Right Management (DRM) bzw. digitaler Rechteverwaltung werden Verfahren und/oder Systeme verstanden, mit welchen eine Nutzung sowie gegebenenfalls auch einen Verbreitung von digitalen Dateninhalten kontrolliert werden soll. Vor allem bei so genanntem Audio- und/oder Video-Content, aber auch bei Software, elektronischen Dokumenten und/oder elektronischen Büchern findet die digitale Rechteverwaltung (DRM) bzw. Nutzungssicherung Verwendung. Durch digitale Rechtverwaltung wird es Anbietern von Dateninhalten ermöglicht, eine Nutzungskontrolle für ihre Dateninhalte durchzuführen, prinzipiell neue Abrechnungsmöglichkeiten (z.B. Vergütung von Lizenzen, Berechtigungen, etc.) zu entwickeln und sich damit Nutzungsrechte an Dateninhalten anstatt die Dateninhalte selbst, vergüten zu lassen.

Ein DRM-System bzw. ein System zur digitalen Rechteverwaltung stellt damit eine technische Sicherheitsmaßnahme dar, um einem Rechtinhaber bzw. Anbieter von Dateninhalten, welche so genannte Informationsgütern darstellen, eine Möglichkeit zu geben, die Art einer Nutzung seines Eigentums (d.h. der Dateninhalten) durch Nutzer technisch auf eine zuvor getroffene Nutzungsvereinbarung zu beschränken. Dazu werden elektronische Schutzmechanismen für die Dateninhalte eingesetzt, durch welche eine Verwertung der Dateninhalte über eine reine pauschale Vergütung hinaus ermöglicht und zusätzlich beispielsweise eine individuelle Lizenzierung/Abrechnung nach Nutzungshäufigkeit, Nutzungsdauer und/oder Nutzungsumfang erlaubt bzw. unberechtigte Nutzung (z.B. Kopieren, Vervielfältigen, etc.) unterbunden wird. Damit wird einerseits die unbegrenzte Nutzung einschränkbar, anderseits werden so genannte On-Demand-Geschäftsmodelle ermöglicht, die ohne DRM-Systeme kaum oder nur sehr schwer zu realisieren sind.

Durch DRM-Systeme werden Dateninhalte wie z.B. Audio- und/oder Videoinhalte, etc. vor einer digitalen Übertragung auf eine Ausgabeeinheit verschlüsselt - d.h. vom DRM-System wird der Datenstrom (z.B. ein so genannter Videostream, etc.) verschlüsselt. Der verschlüsselte Datenstrom wird an eine Ausgabeeinheit wie z.B. einen PC, Laptop, etc. und dann direkt auf der Ausgabeeinheit - beispielsweise bei entsprechender Berechtigung, nach Prüfung der Berechtigungen durch das DRM-System, etc. - entschlüsselt. Auf diese Weise wird ein Abfangen von Dateninhalten bei einer Übertragung zwischen Verteilungsanwendung und Ausgabeeinheit z.B. über ein Kommunikationsnetz wie das Internett bzw. vor einer Darstellung auf der Ausgabeeinheit verhindert. Für die weitere Darstellung bzw. für eine Betrachtung der Dateninhalte, insbesondere Videodaten, z.B. auf einem zur Ausgabeeinheit gehörenden Bildschirm müssen die Dateninhalte jedoch vollkommen unverschlüsselt vorliegen. D.h. die Dateninhalte müssen vollkommen unverschlüsselt z.B. einer Grafikkarte der Ausgabeeinheit (z.B. PC, Laptop, etc.) oder einer Anwendung zum Anzeigen der jeweiligen Dateninhalte zur Verfügung gestellt werden.

Dabei besteht allerdings die Gefahren - insbesondere bei exklusiven Dateninhalten in hoher Qualität (z.B. Videoinhalt vor Verfügbarkeit auf so genannten DVDs, etc.), dass diese Dateninhalte mittels so genannter Screen Capture Software - z.B. während einer Wiedergabe auf der Ausgabeeinheit - digital abgefilmt bzw. kopiert werden, um die Dateninhalte dann ungeschützt bzw. entgegen einer Nutzungsvereinbarung weiterverwenden oder z.B. weiterverwerten (z.B. in Datentauschbörsen, etc.) zu können.

Mittels älterer Screen Capture Software (z.B. Camtasia, Tunebite, WM Capture, etc.) waren aufgrund der hohen Ressourcen- bzw. Systemanforderungen beim Aufnehmen von Dateninhalten ein Mitschneiden und/oder Abfilmen von Dateninhalten mit hoher Qualität - insbesondere von Videodaten - noch nicht möglich. So ist beispielsweise eine Darstellung dieser Dateninhalte auf einer Ausgabeeinheit wie einem Bildschirm unkomprimiert. Das bedeutet z.B., dass bei Videodaten in so genannter High Definition- oder HD-Qualität (d.h. 1080p@60Hz bzw. 1920 x 1080 Bildpunkte im Zeilensprungverfahren und 60 Halbbilder pro Sekunde) 124,4 Megapixel pro Sekunde (Mpx/s) anfallen.

Beim so genannten Screen Capturing muss diese sehr ernorme Datenrate z.B. von der Ausgabeeinheit, vor allem vom Prozessor der Ausgabeeinheit, auf welcher der Dateninhalt abgespielt und dabei abgefilmt wird, verarbeitet werden. Dann für eine einsprechende Kopie des Dateninhalts beispielsweise in einem so genannten Arbeitsspeicher der Ausgabeeinheit zwischengespeichert und letztendlich auf ein Medium (z.B. Festplatte der Ausgabeeinheit, etc.) geschrieben werden. Weiterhin kann auch noch optional eine so genannte Enkodierung durchgeführt werden. Dadurch wird die Auslastung der Ausgabeeinheit, insbesondere des Prozessors sowie des Arbeitsspeichers, noch weiter erhöht und nur die Auslastung des Speichermediums (z.B. Festplatte, etc.) reduziert. Durch die starke Belastung der Ausgabeeinheit war daher mit älterer Screen Capture Software ein Abfilmen von Dateninhalten - insbesondere ein Abfilmen von Dateninhalten in HD-Qualität - während des Abspielens auf der Ausgabeeinheit nur schwer bis kaum möglich.

Daher besteht die Möglichkeit - vor allem um die Auslastung der Ausgabeeinheit (z.B. Prozessor, Arbeitsspeicher) zu verringern, beim Abfilmen von Dateninhalten mit so genannter Screen Capture Software die Dateninhalte mit einer geringeren Bildauflösung und/oder mit einer geringeren Bildfrequenz aufzunehmen bzw. zu kopieren. Dadurch wird allerdings die Qualität der abgefilmten/ kopierten Dateninhalte reduziert. Die abgefilmten bzw. kopierten Dateninhalte weisen damit eine Qualität auf, wie beispielsweise ein Film- bzw. Kameramitschnitt in einem Kinosaal.

Allerdings werden die Hardwarekapazitäten von Ausgabeeinheiten (z.B. PC, Laptop, etc.) ständig verbessert und gesteigert. Daher kann mit der beim so genannten Screen Captureing bzw. beim Abfilmen/Kopieren von auf einer Ausgabeeinheit ablaufenden Dateninhalten, insbesondere Videodaten, immer besser umgegangen werden. Es wird durch die verbesserten und gesteigerten Hardwarekapazitäten der Ausgabeeinheiten technisch leichter möglich, geschützte Dateninhalte, insbesondere Videodaten, vor allem mittels Screen Capture Software digital "abzufilmen" bzw. zu kopieren und diese dann ungeschützt bzw. unter Umgehung von Nutzungsrechten bzw. digitaler Rechtsicherung weiterzuverwenden oder z.B. über Tauschbörsen weiterzuverbreiten. Das bedeutet, Dateninhalte wie z.B. qualitativ hochwertige Videodaten, etc. durch reine Verschlüsselung bzw. durch einen Einsatz von DRM-Systemen nicht mehr ausreichend gesichert und geschützt sind. Es muss daher ein geeigneter Schutz gegen ein widerrechtliches Abfilmen, Abfotografieren und/oder Kopieren - insbesondere gegen das so genannte Screen Capturing - durchgeführt werden.

Dazu gibt es bereits Ansätze wie z.B. eine Anwendung der Firma widevine, zu welcher Informationen auf der Homepage http://www.widevine.com zu finden sind und welche zum Unternehmen Google gehört. Von der Firma widevine wird eine so genannte Digital Copy Protection - insbesondere in Kombination mit einem DRM-System - angeboten. Diese so genannte Digital Copy Protection ist beispielsweise in der Schrift US 2007/ 0083937 A1 beschrieben. Vom in dieser Schrift offenbarten Verfahren zum Schutz von digitalen Daten bzw. Medieninhalten wird ähnlich wie ein so genannter Virenscanner gearbeitet. Dabei werden zusätzlich zu den geschützten Daten so genannte Detektoren mitgesendet, welche während einer Nutzung von geschützten Medieninhalten bzw. Daten alle Prozesse auf der Ausgabeeinheit des Benutzers auf verdächtige Prozesse wie z.B. Screen Capturing Software, etc. überwachen. Verdächtige Prozesse werden von den Detektoren erkannt und es werden beispielsweise über das Internet von den Detektoren entsprechende Meldungen zu einem zentralen Überwachungssystem gesendet, um z.B. entsprechende, vordefinierte Maßnahmen durchzuführen und gegebenenfalls widerrechtliches Kopieren zu verhindern. Derartige Maßnahmen reichen z.B. von stillem Beobachten der verdächtigen Prozesse bis zum sofortigen Widerruf der Nutzungsrechte an den Dateninhalten.

Die in der Schrift US 2007/0083937 A1 beschriebene Methode weist allerdings den Nachteil auf, dass ein Verhalten der Ausgabeeinheit ständig analysiert und über das Internet an ein Überwachungssystem zurückgemeldet werden muss, wobei zusätzlich die Detektoren ebenfalls abgeglichen werden. Neue bedenkliche Verhaltensmuster der Ausgabeeinheit werden dann in Form neuer oder angepasster Detektoren wieder z.B. über das Internet an die Ausgabeeinheit übertragen. Das heißt, dass es während eines Abspielens von Dateninhalten eine laufenden Überwachung und ein Austausch von Überwachungsdaten (z.B. Meldungen der Detektoren, Anpassen der Detektoren, etc.) zwischen der Ausgabeeinheit und dem zentralen Überwachungssystem - teilweise ohne Wissen des Benutzers - durchgeführt wird. Dies ist z.B. aus Datenschutzgründen nicht ganz unbedenklich, denn es könnte z.B. eine so genannte Screen Capture Software auch für nicht rechtwidrige Zwecke (d.h. für ein erlaubtes Kopieren von Dateninhalten, etc.) auf der Ausgabeeinheit installiert sein. Weiterhin ist des bei der in der Schrift US 2007/0083937 A1 dargestellten Methode notwendig, dass das Verteilungssystem, von welchem die Dateninhalte zur Verfügung gestellt werden, über ein entsprechende Überwachungssystem oder eine Anbindung zu diesem verfügen müssen. Zusätzlich kann auch eine laufende Anpassung der Überwachungslösung notwendig sein, um immer die aktuellsten bzw. geänderte verdächtige Verhaltensmuster der Ausgabeeinheiten zu erkennen.

### Darstellung der Erfindung

Der Erfindung liegt daher die Aufgabe zugrunde, ein Verfahren anzugeben, durch welches auf einfache Weise und ohne großen Aufwand sowie laufende Anpassungen ein widerrechtliches Kopieren von Dateninhalten, insbesondere Videodaten, auf einer Ausgabeeinheit insbesondere ohne Verwendung von datenschutzrelevanten Informationen verhindert wird.

Die Lösung der Aufgabe erfolgt erfindungsgemäß durch ein Verfahren der eingangs angeführten Art mit den in Anspruch 1 beschriebenen Merkmalen. Vorteilhafte Ausgestaltungen der Vorrichtung sind in den abhängigen Ansprüchen angeführt.

Erfindungsgemäß erfolgt die Lösung der Aufgabe mit einem Verfahren der eingangs erwähnten Art, bei welchem während eines Abspielens von über eine Kommunikationsnetz auf eine Ausgabeeinheit geladenen Dateninhalten, insbesondere Videodaten, eine aktuelle Systemauslastung der Ausgabeeinheit überwacht wird. Dann wird die aktuelle Systemauslastung der Ausgabeeinheit mit einer abgeschätzten Standardsystemauslastung der Ausgabeeinheit verglichen. Wird die abgeschätzte Standardsystemauslastung durch die aktuelle Systemauslastung signifikant und eindeutig überschritten, so werden entsprechende Schutzmaßnahmen für die Dateninhalte ergriffen.

Der Hauptaspekt der erfindungsgemäß vorgeschlagenen Lösung besteht vor allem darin, dass damit auf einfache Weise ein widerrechtliches Kopieren von geschützten Dateninhalten z.B. durch Kopiersoftware, insbesondere so genannte Screen Capturing-Software, auf der Ausgabeeinheit verhindert wird. Weiterhin kann durch das erfindungsgemäße Verfahren ein derartiges widerrechtliches Kopieren von Dateninhalten auch für zukünftige Ausgabeeinheiten bzw. deren Hardware ohne großen Aufwand genutzt werden. Das erfindungsgemäße Verfahren bedarf keiner laufende Kommunikation über ein Kommunikationsnetz mit einem Überwachungssystem und/oder regelmäßiger Updates einer Überwachungssoftware bzw. entsprechender Schutzanwendungen, um entsprechenden Kopiersoftware auf der Ausgabeeinheit zu erkennen. Zusätzlich ist durch das erfindungsgemäße Verfahren auch nicht notwendig entsprechende Schutzanwendungen und/oder Überwachungssysteme bei den Verteilungsanwendungen zu installieren. Das erfindungsgemäße Verfahren kann einfach und leicht an die jeweilige Ausgabeeinheit für einen Schutz der von Verteilungsanwendungen geladenen Daten angepasst werden.

Dadurch kann auf einfach Weise ein möglicher Missbrauch von Dateninhalten - insbesondere beim Abspielen, Abrufen, etc. von Dateninhalten wie z.B. Videoinhalten, etc. - erkannt werden. Wird ein derartiger Missbrauch erkannt, so können entsprechende Schutzmaßnahmen für die Dateninhalte ergriffen werden. Dazu werden auch keinen datenschutzrelevanten Informationen wie z.B. laufende Prozesse, installierte Software, etc. verwendet und/oder an eine externe Anwendung - gegebenenfalls ohne Kenntnis des Benutzers der Ausgabeeinheit - übermittelt. Durch eine "absolute" Berechnung von Systemauslastungen entsteht einerseits kein Fenster zwischen einer Verbesserung einer so genannten Screen Capturing-Software und einem Update der entsprechenden Schutzsoftware, welche für ein Erkennen des Kopierens auf der Ausgabeeinheit benötigt wird. Andererseits wird auf diese Weise ein ewiger Kreislauf zwischen Missbrauch bzw. entsprechender Anwendungen dazu (z.B. Screen Capturing Software, etc.) und einer entsprechend passenden Schutzsoftware unterbunden.

Es ist dabei von Vorteil, wenn für ein Abschätzen der Standardsystemauslastung der Ausgabeeinheit eine Systemauslastung für eine Decodierung und Entschlüsselung der abzuspielenden Dateninhalte sowie eine Systemauslastung für standardmäßig auf der Ausgabeeinheit laufende Grundanwendungen herangezogen werden. Damit kann das erfindungsgemäße Verfahren sehr einfach für beliebige verschlüsselte und kodierte (z.B. durch so genannte DRM-Systeme) Dateninhalte eingesetzt werden, da immer die entsprechende Systemauslastung für die jeweils notwendige Decodierung und Entschlüsselung der Dateninhalte berücksichtigt wird. Weiterhin werden auch standardmäßig auf der Ausgabeeinheit laufende Grundanwendungen wie z.B. Betriebssystemanwendungen, Hintergrundanwendungen, etc. berücksichtigt. Damit wird verhindert, dass derartige Grundanwendungen zu einer Fehlinterpretation der aktuellen Systemauslastung führen. Zusätzlich ist es möglich, durch entsprechende Berücksichtigung beim Abschätzen der Standardsystemauslastung ein zulässiges Kopieren bzw. eine Installation von Kopiersoftware (z.B. Screen Capturing-Software) für legale Zwecke bzw. bei Vorliegen von entsprechenden Berechtigungen zu berücksichtigen.

Es ist auch günstig, wenn eine Überwachung der aktuellen Systemauslastung der Ausgabeeinheit während einer vorgebbaren Zeitspanne durchgeführt wird und mit der abgeschätzten Standardsystemauslastung der Ausgabeeinheit für diese Zeitspanne verglichen wird. Damit kann auf einfache Weise ein Zeitraum, innerhalb welchem beim Abspielen von Dateninhalten eine Überwachung bzw. eine Prüfung auf unzulässiges Kopieren der Dateninhalte durchgeführt wird, begrenzt werden. Wird innerhalb dieses Zeitraum keine signifikante Abweichung der Systemauslastung von der abgeschätzten Standardsystemauslastung festgestellt, so werden die Dateninhalte mit sehr hoher Wahrscheinlichkeit nicht kopiert, da insbesondere bei Videoinhalten üblicherweise die Dateninhalte während des gesamten Abspielens kopiert werden. Wird während der vorgebbaren Zeitspanne eine große Differenz zwischen aktueller Systemauslastung und abgeschätzter, zu erwartender Standardsystemauslastung festgestellt, so ist ein Kopieren mittels einer Kopiersoftware bzw. ein so genanntes Screen Capturing wahrscheinlich und es können rasch entsprechende Maßnahmen zum Schutz der Dateninhalte ergriffen werden.

Eine bevorzugte Weiterbildung des erfindungsgemäßen Verfahrens sieht vor, dass bei Übersteigen der Standardsystemauslastung durch die aktuelle Systemauslastung als Schutzmaßnahme das Abspielen der Dateninhalte unterbrochen wird. Damit wird auf einfache Weise ein Kopieren von geschützten Daten verhindert. Als Varianten dieser Schutzmaßnahmen sind beispielsweise ein Stoppen oder Abbrechen des Abspielens der Dateninhalte auf der Ausgabeeinheit, ein Stoppen oder Abbrechen einer Übertragung der Dateninhalte von der zugehörigen Verteilungsanwendung (z.B. Maxdome, Apple iTunes, etc.) auf die Ausgabeeinheit und/oder insbesondere bei Videodaten, aber auch Audiodaten, welche gestreamt werden (d.h. das Abspielen der Dateninhalte auf der Ausgabeeinheit beginnt bereits während bzw. fast gleichzeitig mit dem Übertragen der Dateninhalte), ein Stoppen des Streamings möglich.

In weiterer Ausgestaltung der Erfindung ist es möglich, bei Übersteigen der Standardsystemauslastung durch die aktuelle Systemauslastung als Schutzmaßnahme für die Dateninhalte eine Benachrichtigung an die jeweilige Verteilungsanwendung, von welcher die Dateninhalte übertragen worden sind oder gestreamt werden, zu senden. Durch diese Schutzmaßnahme für die Dateninhalte kann z.B. dem Anbieter von Dateninhalten ein widerrechtliches Kopieren der Dateninhalte mitgeteilt werden. Die Benachrichtigung kann beispielsweise aber auch an ein sogenanntes Backendsystem für Analysezwecke gesendet werden oder an den Rechtinhaber der Dateninhalte übermittelt werden. Das Übersenden der Benachrichtigung kann beispielsweise alternativ oder zusätzlich zum Unterbrechen des Abspielens der Dateninhalte auf der Ausgabeeinheit erfolgen.

Weiterhin ist es vorteilhaft, wenn für eine Differenz zwischen aktueller Systemauslastung und abgeschätzter Standardsystemauslastung der Ausgabeeinheit ein Grenzwert oder gegebenenfalls auch mehrere Grenzwert vorgegeben werden. Durch einen Grenzwert kann z.B. sehr einfach festgestellt werden, ob ein Übersteigen der abgeschätzten Standardsystemauslastung durch die aktuelle Systemauslastung bereits signifikant und auffällig ist oder innerhalb einer tolerierbaren Schwankungsbreite gelegen ist. Durch Vorgabe von einem oder gegebenenfalls mehreren Grenzwerten für die Differenz können auch jeweils verschiedene Schutzmaßnahmen für die Dateninhalte festgelegt werden. So kann z.B. eine Benachrichtigung an die Verteilungsanwendung gesendet werden, wenn die aktuelle Systemauslastung der Ausgabeeinheit die abgeschätzte Standardsystemauslastung übersteigt, die Differenz aber unterhalb eines vorgegebenen Grenzwertes liegt. Erst wenn z.B. von der Differenz zwischen aktueller Systemauslastung und abgeschätzter Standardsystemauslastung der Ausgabeeinheit den vorgegebenen Grenzwert überschritten wird, kann beispielsweise das Abspielen der Dateninhalte auf der Ausgabeeinheit unterbrochen werden.

### Kurzbeschreibung der Zeichnung

Die Erfindung wird nachfolgend in beispielhafter Weise anhand der beigefügten Figur erläutert, welche beispielhaft und schematisch einen Ablauf des erfindungsgemäßen Verfahrens zum Schützen von Dateninhalten zeigt.

### Ausführung der Erfindung

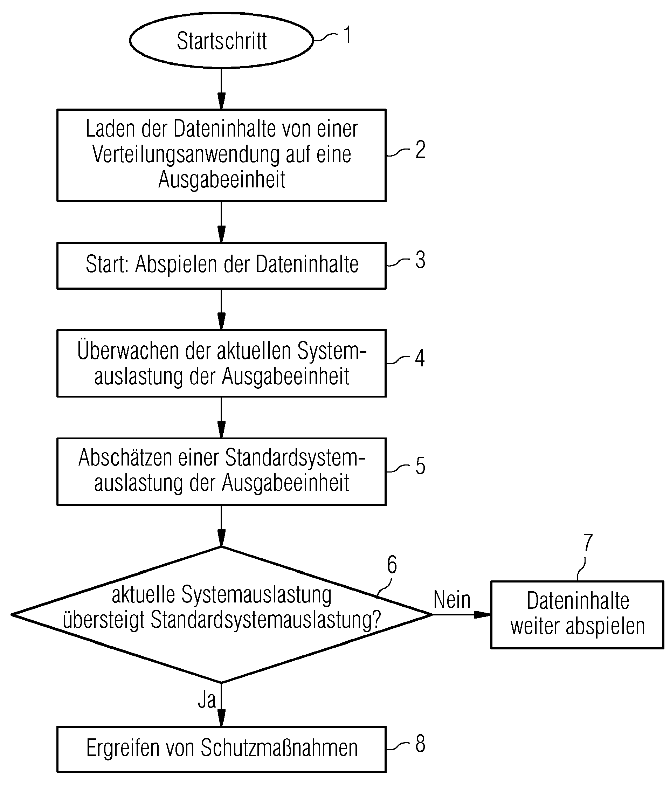

Figur 1 zeigt beispielhaft und in schematischer Weise einen Ablauf des erfindungsgemäßen Verfahrens zum Schützen von Dateninhalten, welche von einer Verteilungsanwendung wie z.B. YouTube, Maxdome, Apple iTunes, etc. über ein Kommunikationsnetz wie z.B. dem Internet auf eine Ausgabeeinheit geladen werden. Als Ausgabeeinheit kann beispielsweise ein Personal Computer, Laptop, Tablet-PC, etc. verwendet werden.

Das erfindungsgemäße Verfahren beginnt mit einem Startschritt 1. Dabei werden in einem zweiten Verfahrensschritt 2 Dateninhalte, insbesondere Videodaten, von der Verteilungsanwendung - beispielsweise als so genannter Videostream - auf die Ausgabeeinheit geladen. Auf der Ausgabeeinheit wird dann in einem dritten Verfahrensschritt 3 begonnen, die Dateninhalte auf der Ausgabeeinheit bzw. auf dem zugehörigen Bildschirm angezeigt bzw. abgespielt. Dabei können im dritten Verfahrensschritt 3 die Dateninhalte zusätzlich entsprechend dekodiert und/oder entschlüsselt werden, damit sie für einen Benutzer auf der Ausgabeeinheit anzeigbar sind.

In einem vierten Verfahrensschritt 4 wird während des Anzeigens bzw. Abspielens der Dateninhalte eine aktuelle Systemauslastung der Ausgabeeinheit (z.B. Auslastung von Prozessor, Arbeitsspeicher, etc.) analysiert und überwacht. Parallel dazu wird in einem fünften Verfahrensschritt eine Standardsystemauslastung der Ausgabeeinheit abgeschätzt. Dabei wird beispielsweise eine für ein Anzeigen bzw. Abspielen von Dateninhalten entsprechend zu erwartende Systemauslastung angenommen. D.h. es wird eine Systemauslastung der Ausgabeeinheit für standardmäßig laufende Grundanwendungen wie z.B. Betriebssystemanwendungen, Hintergrundanwendungen, etc. herangezogen, da diese Grundanwendungen üblicherweise auf der Ausgabeeinheit laufen und von diesen für eine entsprechende Systemauslastung gesorgt wird, wenn die Ausgabeeinheit sich in Betrieb findet. Zusätzlich wird für ein Abschätzen der Standardsystemauslastung der Ausgabeeinheit auch eine Systemauslastung für eine Decodierung und Entschlüsselung der abzuspielenden Dateninhalte berücksichtigt, damit die Systemauslastung, welche durch Decodieren und Entschlüsseln der Dateninhalte verursacht wird, nicht zu einem fälschen Auslösen von Schutzmaßnahmen führt.

Nach dem Abschätzen der Standardsystemauslastung der Ausgabeeinheit werden in einem sechsten Verfahrensschritt 6 die abgeschätzte und die für ein Abspielen von Dateninhalten zu erwartende Standardsystemauslastung mit der aktuellen Systemauslastung der Ausgabeeinheit verglichen. Dabei kann die Überwachung der aktuellen Systemauslastung bzw. das Abschätzen der Standardsystemauslastung für eine vorgebbare Zeitspanne durchgeführt werden.

Wird im sechsten Verfahrensschritt 6 festgestellt, dass die aktuelle Systemauslastung der Ausgabeeinheit die abgeschätzte und für eine Wiedergabe von Dateninhalten, insbesondere Videodaten bzw. Videostreams, erwartete Standardsystemauslastung der Ausgabeeinheit nicht oder gegebenenfalls nur geringfügig übersteigt, so wird in einem siebenten Verfahrensschritt 7 die Ausgabe bzw. das Abspielen der Dateninhalte fortgesetzt. Wird allerdings im sechsten Verfahrensschritt 6 ein Übersteigen, insbesondere signifikantes Übersteigen, der abgeschätzten Standardsystemauslastung durch die aktuelle Systemauslastung festgestellt, so werden in einem achten Verfahrensschritt entsprechende Maßnahmen zum Schutz der Dateninhalte - vor allem gegen widerrechtliches Kopieren durch Einsatz von Kopiersoftware, insbesondere von so genanntem Screen Capturing - ergriffen.

Als entsprechende Schutzmaßnahme kann beispielsweise im achten Verfahrensschritt 8 eine Benachrichtigung an die Verteilungsanwendung, von welcher die Dateninhalte über das Kommunikationsnetz bezogen werden, gesendet werden. Zusätzlich oder alternativ ist es auch möglich, im achten Verfahrensschritt 8 das Anzeigen bzw. Abspielen der Dateninhalte auf der Ausgabeeinheit zu stoppen bzw. z.B. ein so genanntes Video-Streaming zu beenden, damit der Benutzer beispielsweise keine verwertungsfähige Kopie der Dateninhalte auf der Ausgabeeinheit generieren kann.

Für ein besseres Abschätzen, ob gegebenenfalls ein zusätzliches Kopieren der Dateninhalte auf der Ausgabeeinheit durchgeführt wird oder nicht, ist es denkbar, im sechsten Verfahrensschritt 6 nicht nur zu prüfen, ob die aktuelle Systemauslastung der Ausgabeeinheit die abgeschätzte Standardsystemauslastung übersteigt, sondern eine Differenz zwischen aktueller Systemauslastung und abgeschätzter Standardsystemauslastung zu ermitteln. Für diese Differenz kann dann ein Grenzwert vorgegeben werden. Wird im sechsten Verfahrensschritt 6 festgestellt, dass die Differenz den Grenzwert übersteigt, können dann im achten Verfahrensschritt 8 entsprechende Schutzmaßnahmen für die Dateninhalten (z.B. Benachrichtigung an die Verteilungsanwendung, Stoppen des Abspielens, etc.) eingeleitet werden.

Auf diese Weise kann sehr einfach ein widerrechtliches Kopieren von insbesondere geschützten Dateninhalten auf einer Ausgabeeinheit - auch bei entsprechend leistungsstarker Hardware bzw. auch für zukünftige Hardware - verhindert werden. Es ist außerdem keine Installation oder laufendes Anpassen von Schutzanwendungen notwendig und es werden vom erfindungsgemäßen Verfahren auch keine datenschutzrelevanten Informationen (z.B. laufende Prozesse, installierte Software auf der Ausgabeeinheit, etc.) abgefragt bzw. verwendet.

## Patentansprüche

1. Verfahren zum Schützen von Dateninhalten vor einem widerrechtlichen Kopieren, wobei die Dateninhalte von einer in einem Kommunikationsnetz verfügbaren Verteilungsanwendung auf eine Ausgabeeinheit geladen (1, 2) und auf der Ausgabeeinheit abgespielt werden (3), **dadurch gekennzeichnet, dass** während eines Abspielens von geladenen Dateninhalten auf der Ausgabeeinheit eine aktuelle Systemauslastung der Ausgabeeinheit überwacht wird (4), dass dann die aktuelle Systemauslastung mit einer abgeschätzten Standardsystemauslastung der Ausgabeeinheit für ein Abspielen von Dateninhalten verglichen wird (5, 6), und dass bei einem Übersteigen der abgeschätzten Standardsystemauslastung durch die aktuelle Systemauslastung entsprechende Schutzmaßnahmen ergriffen werden, wobei als Schutzmaßnahme für die Dateninhalte das Abspielen der Dateninhalte unterbrochen wird (8).

2. Verfahren nach Anspruch 1, **dadurch gekennzeichnet,** das für ein Abschätzen der Standardsystemauslastung der Ausgabeeinheit eine Systemauslastung für eine Decodierung und Entschlüsselung von abzuspielenden Dateninhalten auf der Ausgabeeinheit sowie ein Systemauslastung für standardmäßig auf der Ausgabeneinheit laufende Grundanwendungen herangezogen werden (5).

3. Verfahren nach einem der Ansprüche 1 bis 2, **dadurch gekennzeichnet, dass** eine Überwachung der aktuellen Systemauslastung der Ausgabeeinheit während einer vorgebaren Zeitspanne durchgeführt (4) und mit der abgeschätzten Standardsystemauslastung der Ausgabeeinheit für diese Zeitspanne verglichen wird (6).

4. Verfahren nach einem der Ansprüche 1 bis 3, **dadurch gekennzeichnet, dass** bei Übersteigen der Standardsystemauslastung durch die aktuelle Systemauslastung als Schutzmaßnahme für die Dateninhalte eine Benachrichtigung an die jeweilige Verteilungsanwendung gesendet wird (8).

5. Verfahren nach einem der Ansprüche 1 bis 4, **dadurch gekennzeichnet, dass** für eine Differenz zwischen aktueller Systemauslastung und abgeschätzter Standardsystemauslastung ein Grenzwert vorgegeben wird (6).

## Claims

1. Method for protecting data contents from illegal copying, wherein the data contents are loaded from a distribution application available in a communications network onto an output unit (1, 2) and are played back on the output unit (3), **characterised in that** a current system utilisation of the output unit is monitored (4) during playback of loaded data contents on the output unit, **in that** the current system utilisation is then compared (5, 6) with an estimated standard system utilisation of the output unit for playback of data contents, and **in that** appropriate protective measures are taken when the current system utilisation exceeds the estimated standard system utilisation wherein playback of the data contents is interrupted (8) as a protective measured for the data contents.

2. Method according to claim 1, **characterised in that** a system utilisation for decoding and decryption of data contents to be played back on the output unit and a system utilisation for basic applications which run by default on the output unit are used (5) for estimating the standard system utilisation of the output unit.

3. Method according to any one of claims 1 to 2, **characterised in that** monitoring of the current system utilisation of the output unit is carried out (4) during a predefinable period and is compared (6) with the estimated standard system utilisation of the output unit for this period.

4. Method according to any one of claims 1 to 3, **characterised in that** a message is sent (8) to the respective distribution application as a protective measure for the data contents when the current system utilisation exceeds the standard system utilisation.

5. Method according to any one of claims 1 to 4, **characterised in that** a limit value is predefined (6) for a difference between current system utilisation and estimated standard system utilisation.

## Revendications

1. Procédé de protection de contenus de données contre une copie non autorisée, les contenus de données étant chargés par une application de distribution disponible dans un réseau de communication sur une unité de sortie (1, 2) et lus sur l'unité de sortie (3), **caractérisé en ce que**, pendant une lecture de contenus de données chargés sur l'unité de sortie, une charge actuelle du système de l'unité de sortie est surveillée (4), **en ce qu'**ensuite la charge actuelle du système est comparée à une charge par défaut estimée du système de l'unité de sortie pour une lecture de contenus de données (5, 6), et **en ce que**, si la charge actuelle du système dépasse la charge par défaut estimée du système, des mesures de protection correspondantes sont prises, comme mesure de protection des contenus de données la lecture des contenus de données étant interrompue (8).

2. Procédé selon la revendication 1, **caractérisé en ce que**, pour une estimation de la charge par défaut estimée du système de l'unité de sortie, il est tenu compte d'une charge du système pour un décodage et décryptage de contenus de données à lire sur l'unité de sortie ainsi que d'une charge du système pour des applications de base en cours d'exécution par défaut sur l'unité de sortie (5).

3. Procédé selon l'une des revendications 1 à 2, **caractérisé en ce qu'**une surveillance de la charge actuelle du système de l'unité de sortie est effectuée pendant une période pouvant être fixée à l'avance (4) et comparée à la charge par défaut estimée de l'unité de sortie pour cette période (6).

4. Procédé selon l'une des revendications 1 à 3, **caractérisé en ce que**, si la charge actuelle du système dépasse la charge par défaut estimée du système, une information est envoyée à l'application de distribution respective, comme mesure de protection.

5. Procédé selon l'une des revendications 1 à 4, **caractérisé en ce que**, pour une différence entre charge actuelle du système et charge par défaut estimée du système, une valeur limite est imposée.
